# EUROPEAN PATENT SPECIFICATION

(11) **EP 0 356 769 B1**
(45) Date of publication and mention of the grant of the patent: **17.02.1993**
(21) Application number: 89114622.7
(22) Date of filing: 08.08.1989
(51) Int. Cl.: F16C 1/12, F16H 61/22

(54) **In-line solenoid transmission interlock device**
In einer Linie liegende magnetische Getriebeblockiervorrichtung
Dispositif de blocage de transmission par solénoide coaxial à celui-ci

(30) Priority: 19.08.1988 US 234074
(43) Date of publication of application: 07.03.1990
(73) Proprietor: Lectron Products, Inc., Rochester Hills, Michigan 48308 (US)
(72) Inventor: Martus, Charles Richard, Michigan 48098 (US); Detweiler, Charles Abraham, Durand Michigan 48429 (US); Beneker, Gerrit Van Vranken, Auburn Hills Michigan 48057 (US)
(74) Representative: Witte, Alexander, Dr.-Ing.

(56) References cited:
- EP-A- 0 179 728
- CA-A- 1 203 756
- GB-A- 2 019 963
- US-A- 4 187 935

## Description

The invention relates to an automatic transmission shifter interlock device for a motor vehicle of the type having a cable assembly with an outer sheath and an axially movable inner core therein, with said inner core coupled at opposite ends to a shifter lever and the transmission of said vehicle, a rod connected to said cable core, a tubular rod guide encircling said rod and guiding said rod for axial movement, and releasable rod locking means for inhibiting axial movement of said rod.

An interlock device is known from document GB-A-2019963. A gear selector mechanism for a gearbox described within this document comprises a shaft or a rod axially slidable in a tubular housing. The shaft being movable axially by means of an actuator member which moves in the direction of movement of the shaft. The actuator member is actuated by a shifter lever via a cable. Locking means are provided to lock the shaft against movement relative to the housing. However, an initial movement of the actuator member away from an end position unlocks the locking means and on further movement, when the motion has been taken up, it moves the shaft.

It is the object of the present invention to provide an interlock device making it unable to move the shifter lever in a locked position.

This object is achieved by a pole piece encircling said rod guide, an armature encircling said rod guide and axially movable between a first position displaced from said pole piece and a second position attracted toward said pole piece, a solenoid winding encircling said pole piece and said armature and urging said armature toward said second position when energized, biasing means for urging said armature toward said first position, and wherein said rod locking means inhibits axial movement of said rod when said armature is in said second position and permitting said axial movement when said armature is in said first position, whereby energization of said winding prevents the motor vehicle operator from changing transmission shifter settings whereas de-energization permits said changing.

This invention is directed toward a design for a shifter interlock device which is particularly adapted for motor vehicles having automatic transmissions which are shifted through an actuation cable. The invention employs an electrically energized solenoid positioned in-line with the cable which forces locking elements into engagement with a cable shaft until some action is taken such as when the vehicle's brake pedal is depressed, whereupon the locking elements are permitted to disengage the shaft, thus permitting free movement of the shifter cable. Since most modern vehicles with automatic transmissions use shift cables, the device according to this invention is highly adaptable for use with many motor vehicle models produced by various manufacturers. The present device further restrains movement of the transmission shift cable directly at the transmission shift lever and, therefore, attempts to actuate the shifter while the device is locked do not put extreme loads on the cable. The principal components of the device according to this invention are positioned within the vehicle's occupant compartment where they are protected from the severe outside environment. In accordance with a preferred embodiment of the invention, an adjusting mechanism is provided to accommodate tolerance variations which enables the effective length of the shift cable to be adjusted to provide locking engagement of the device at the desired shifter position.

Additional benefits and advantages of the present invention will become apparent to those skilled in the art to which this invention relates from the subsequent description of the preferred embodiments and the appended claims, taken in conjunction with the accompanying drawings.

### BRIEF DESCRIPTION OF THE DRAWINGS

Figure 1 is a pictorial view of a shifter assembly of an illustrative motor vehicle showing a transmission shifter lever coupled to a transmission shift cable assembly incorporating the in-line solenoid transmission interlock device according to this invention.

Figure 2 is a side elevational view of the end of the in-line solenoid transmission interlock device shown in Figure 1.

Figure 3 is a longitudinal cross-sectional view taken along line 3-3 of Figure 2 particularly showing details of the internal components of the solenoid device.

Figure 4 is a longitudinal cross-sectional view of an in-line solenoid transmission interlock device according to a second embodiment of this invention incorporating a self-adjusting mechanism and dual position locking capability.

### DETAILED DESCRIPTION OF THE INVENTION

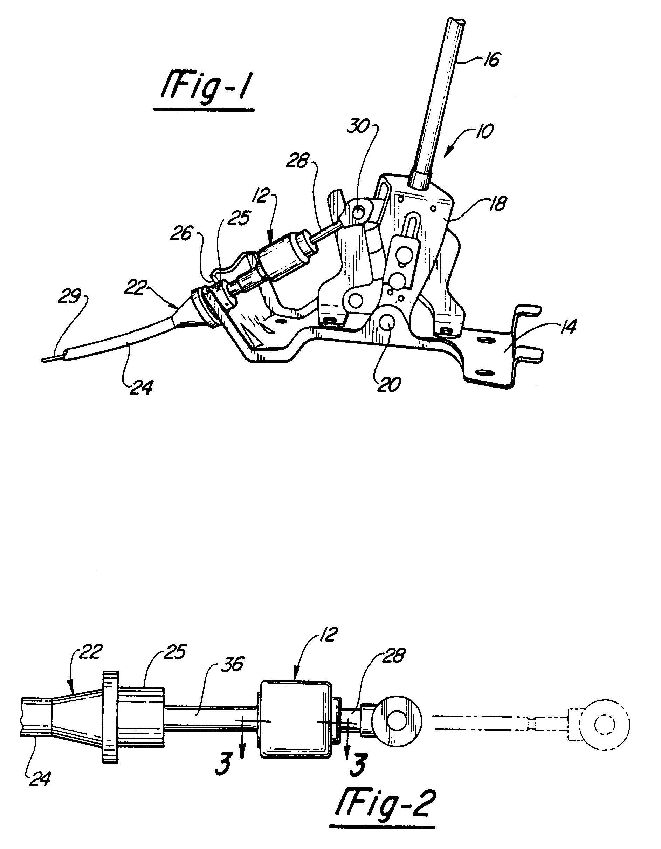

Figure 1 illustrates a motor vehicle automatic transmission shifter assembly 10 with an in-line solenoid transmission interlock device 12 coupled thereto in accordance with this invention. Shifter assembly 10 includes mounting plate 14 for mounting the device to the floor pan of a motor vehicle. Shifter lever 16 is pivotable through a limited angular range with various angular positions corresponding to a particular transmission gear selection. Shifter lever 16 is mounted to clevis 18 which is pinned for rotation with respect to plate 16 by clevis pin 20.

Transmission shift cable assembly 22 includes an outer sheath 24 with an end fitting 25 which is supported by plate 14 at restraining notch 26. Shift cable rod 28 attached to an end of cable core 29 is affixed to clevis 18 via pin 30 such that arcuate motion of shifter lever 16 causes the rod to be moved into and out of outer sheath 24, as shown by the full and phantom line positions in Figure 2. Shifter assembly 10 would further include (not shown) some means for indicating to the operator the transmission selection position which shifter lever 16 is set at. Such indicia can be provided, for example, in the form of a labeled elongated slot through which shifter lever 16 passes, or through a remotely actuated shift indicator device which are well known according to the prior art. The opposite end of cable assembly 22 (not shown) is coupled to the vehicle's automatic transmission. At the transmission, a bracket is provided which restrains outer sheath 24 whereas cable inner core 29 engages a transmission shift actuating lever.

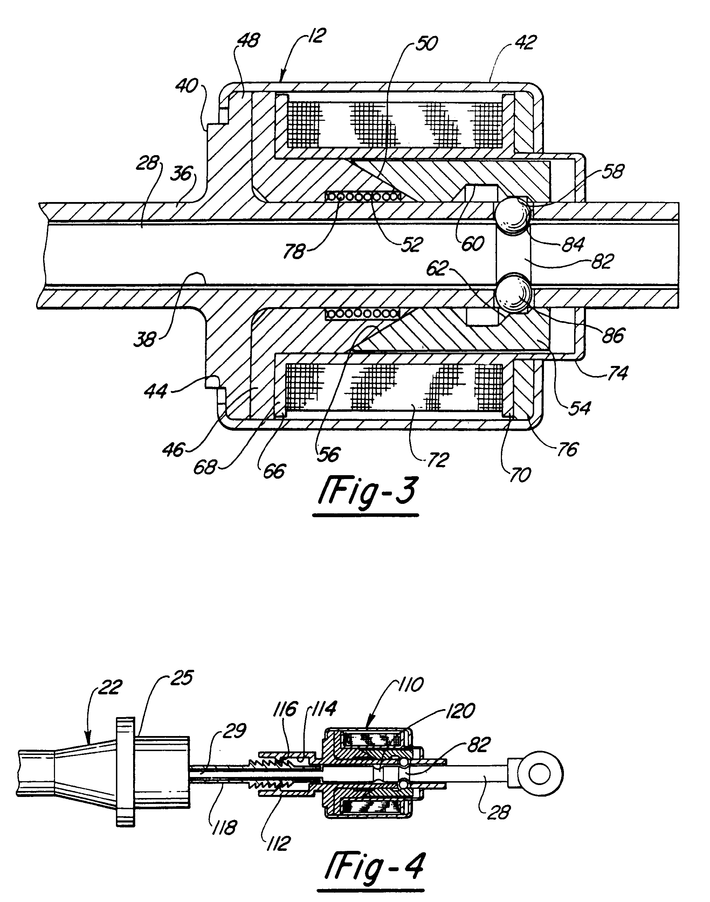

In accordance with a principal feature of this invention, cable assembly 22 includes solenoid device 12 which provides the interlock function such that rod 28 is restrained at a particular position with respect to cable outer sheath 24 until the device is released. With particular reference to Figures 2 and 3, the components making up solenoid device 12 are shown. Rod guide 36 defines elongated internal bore 38 through which shifter rod 28 is longitudinally movable. Rod guide 36 further forms a radially extending circular flange 40 which forms a point of support for the remainder of solenoid 12. Cylindrical housing 42 encloses solenoid 12 and is mounted to flange 40 at rolled over edge 44. Pole piece 46 is fixedly mounted within housing 42 and encircles rod guide 36. Pole piece 46 further defines a radially extending flange 48 which acts as a flux collector at one of its axial ends, and forms a convex frusto-conical surface 50 at its opposite end. Counterbore 52 is formed within pole piece 46 at its end adjacent surface 50.

Armature 54 is movable in an axial direction through a limited range of motion along rod guide 36 and includes a concave frusto-conical surface 56 which corresponds in shape to that of pole piece surface 50. Armature 54 further defines a pair of annular grooves 58 and 60 with groove 60 being deeper in a radial direction than groove 58 and having a conical ramp surface 62 joining the grooves. Coil bobbin 66 encircles pole piece 46 and armature 54, and forms a pair of axially separated flanges 68 and 70 which confine and support coil winding 72. Bobbin 66 further forms an end cup 74 which encloses one end of armature 54 but permits a limited range of longitudinal motion of the armature. Flux collector ring 76 is positioned adjacent flange 70. Return spring 78 is disposed within counterbore 52 and biases armature 54 away from pole piece 46.

At one or more axial positions along shifter rod 28, an inwardly formed annular groove 82 is provided. One or more radial holes 84 is provided through rod guide 36 at a position aligned with groove 82 when the transmission is set in the park position. Balls 86 are loaded into holes 84 and provide a locking function as will be described hereinafter.

Figure 3 illustrates the orientation and cooperation of elements of interlock solenoid 12 when winding 72 is energized which causes the transmission to be locked in the park position. As shown, armature 54 is drawn toward pole piece 46 caused by the induced magnetic field from winding 72. The tapered working air gap provided by the frusto-conical surfaces 50 and 56 provide a desired level of attractive force of armature 54 over a fairly long stroke distance of the armature. However, alternately shaped working air gaps such as planar air gaps could also be used. In the position shown in Figure 3, balls 86 are forced in a radially inward direction through engagement with ramp surface 62 and groove 58 such that they interlockingly engage with rod groove 82. In this condition, the vehicle operator is prevented from moving shifter lever 16 to cause rod 28 to move longitudinally within guide 36. If, however, electric current is interrupted to winding 72 caused, for example, by the operator depressing the vehicle's brake pedal, the magnetic attraction between pole piece 46 and armature 54 is relieved and the biasing force of spring 78 moves the armature 54 away from the pole piece. Once armature 54 is fully extended away from pole piece 46, balls 86 are permitted to move radially outward to seat within groove 60, thus no longer interlockingly engaging rod groove 82.

Figure 4 illustrates a second embodiment of a solenoid interlock device 110 in accordance with this invention. Elements of device 110 which are identical to those previously described in connection with the first embodiment are identified by like reference numbers. For this embodiment, solenoid interlock device 112 is substantially identical to that shown in Figure 3 except that a modified rod guide 112 is provided which acts as an adjustment link. Rod guide 112 forms an enlarged cavity 114 having inwardly directed teeth 116 therein. Cable outer sheath 24 includes a ribbed or toothed plunger 118 interfitting within cavity 114. The teeth 116 and plunger 118 interact so that the plunger can be inserted at various depths within cavity 114 but is restrained from being withdrawn. The function of modified rod guide 112 and plunger 118 is to provide a means for adjusting the effective length of outer sheath 24 to accommodate tolerance variations in the vehicle and cable assemblies. In use, solenoid device 110 is positioned for engagement of locking balls 86 with groove 82. The transmission shift lever (not shown) is placed in the park position and the opposite end of the cable is mounted. Due to tension between cable core 29 and outer sheath 24, plunger 118 is forced within cavity 114 to the proper position.

Modified solenoid device 110 as shown in Figure 4 further incorporates an additional locking groove 120 which enables interlock device 110 to lock at two positions, thus enabling the manufacturer to provide interlock capability operable at either the neutral or park transmission selector positions.

While the above description constitutes the prefered embodiments of the present invention, it will be appreciated that the invention is susceptible to modification, variation and change without departing from the proper scope and fair meaning of the accompanying claims.

## Claims

1. An automatic transmission shifter interlock device for a motor vehicle of the type having a cable assembly (10) with an outer sheath (24) and an axially movable inner core (29) therein, with said inner core (29) coupled at opposite ends to a shifter lever (16) and the transmission of said vehicle, a rod (28) connected to said cable core (29), a tubular rod guide (36) encircling said rod (28) and guiding said rod (28) for axial movement, and releasable rod locking means comprising a locking element and groove arrangement for inhibiting axial movement of said rod, characterized by:
- a pole piece (46) encircling said rod guide (36),
- an armature (54) encircling said rod guide (36) and axially movable between a first position displaced from said pole piece (46) and a second position attracted toward said pole piece (46),
- a solenoid winding (72) encircling said pole piece (46) and said armature (54) and urging said armature (54) toward said second position when energized,
- biasing means (78) for urging said armature (54) toward said first position, and wherein
- said rod locking means inhibits axial movement of said rod (28) when said armature (54) is in said second position and permitting said axial movement when said armature (54) is in said first position, whereby energization of said winding (72) prevents the motor vehicle operator from changing transmission shifter settings whereas de-energization permits said changing.

2. An interlock device according to claim 1, wherein said rod locking means comprises said armature (54) defining an inside groove (58) which engages at least one ball element (86) when in said one position to urge said ball (86) into engagement with a groove (82) on a movable portion of said rod (28).

3. An interlock device according to claim 2, wherein said movable portion of said rod (28) defines at least two of said grooves (82, 120).

4. An interlock device according to any one of claims 1 - 3 wherein said rod locking means inhibits axial movement of said cable inner core (29) when said armature (54) is in said second position.

5. An interlock device according to claim 4, further comprising spring means (78) urging said armature (54) to said first position.

6. An interlock device according to any one of claims 1 - 5, further comprising cable length adjustment means including said outer sheath (24) having an adjustable link with a first set of engagement members affixed to one portion of said cable sheath (24) and a second set of engagement members affixed to another portion of said cable sheath (24), said engagement members enabling the collapsing of said adjustment link but inhibiting expansion of said link.

## Patentansprüche

1. Verriegelungsvorrichtung für den Wählhebel eines Automatikgetriebes eines Kraftfahrzeuges, mit einer Kabelanordnung (10), die eine äußere Hülle (24) und einen darin aufgenommenen, axial beweglichen, inneren Kern (29) aufweist, wobei der innere Kern (29) an gegenüberliegenden Enden mit einer Wählhebelstange (16) und mit dem Getriebe des Kraftfahrzeuges in Verbindung steht, sowie mit einer mit dem Kern (29) des Kabels verbundenen Stange (28), wobei eine rohrartige Stangenführung (36) die Stange (28) umgibt und die Stange (28) axial beweglich führt, und mit lösbaren Stangenverriegelungsmitteln, die die Anordnung eines Verriegelungselements und einer Nut aufweisen, um ein axiales Bewegen der Stange zu verhindern, gekennzeichnet durch
- einen Polschuh (46), der die Stangenführung (36) umgibt,
- einen Anker (54), der die Stangenführung (36) umgibt, und der zwischen einer ersten Stellung, in der er entfernt vom Polschuh (46) ist, und einer zweiten Stellung, in der er auf den Polschuh (46) gezogen ist, axial hin- und herbewegbar ist,
- eine Solenoidwicklung, die den Polschuh (46) und den Anker (54) umgibt und die, falls diese erregt wird, den Anker (54) in Richtung der zweiten Stellung rückt,
- Spannmittel (78), um den Anker (54) in Richtung der ersten Stellung zu drücken, und wobei
- die Stangenverriegelungsmittel ein axiales Bewegen der Stange (28) verhindern, falls sich der Anker (54) in der zweiten Stellung befindet, und die dieses axiale Bewegen ermöglichen, falls sich der Anker (54) in der ersten Stellung befindet, wobei eine Erregung der Wicklung (72) den Benutzer des Kraftfahrzeuges daran hindert Getriebewählstellungen zu ändern, wohingegen ein Abschalten solche Änderungen erlaubt.

2. Verriegelungsvorrichtung nach Anspruch 1, dadurch gekennzeichnet, daß die Stangenverriegelungsmittel den Anker (54) enthalten, der eine innenliegende Nut (58) umgrenzt, die mit zumindest einem Ballelement (86) in Eingriff steht, falls dieser sich in der einen Stellung befindet um die Kugel (86) in Eingriff mit einer auf einem sich bewegenden Abschnitt der Stange (28) befindlichen Nut (82) zu drücken.

3. Verriegelungsvorrichtung nach Anspruch 2, dadurch gekennzeichnet, daß der sich bewegende Abschnitt der Stange (28) zumindest zwei Nuten (82,120) umgrenzt.

4. Verriegelungsvorrichtung nach einem der Ansprüche 1 bis 3, dadurch gekennzeichnet, daß die Stangenverriegelungsmittel ein axiales Bewegen des inneren Kerns (29) des Kabels hindern, falls sich der Anker (54) in seiner zweiten Stellung befindet.

5. Verriegelungsvorrichtung nach Anspruch 4, dadurch gekennzeichnet, daß ferner Federmittel (78) vorgesehen sind, an den Anker (54) in die erste Stellung zu drücken.

6. Verriegelungsvorrichtung nach einem der Ansprüche 1 bis 5, dadurch gekennzeichnet, daß ferner Justiermittel für die Kabellänge vorgesehen sind, die die äußere Hülle (24) einschließen, wobei diese eine einstellbare Verbindung mit einem ersten Satz an Eingriffselementen, die an einem Abschnitt der Kabelhülle (24) angebracht sind und einen zweiten Satz an Eingriffselementen aufweist, die an einem anderen Abschnitt der Kabelhülle (24) angebracht sind, wobei die Eingriffselemente ein Zusammenfahren der Justierverbindung ermöglichen, ein Auseinanderziehen der Verbindung jedoch verhindern.

## Revendications

1. Dispositif de verrouillage de sélecteur de transmission automatique pour véhicule automobile, du type comprenant un assemblage à câble (10), avec une gaine extérieure (24) et un noyau intérieur (29), déplaçable axialement à l'intérieur, ledit noyau intérieur (29) étant couplé par extrémités opposées à un levier de sélection (16) et à la transmission dudit véhicule, une tige (28) reliée audit noyau de câble (29), un guide de tige tubulaire (36), encerclant ladite tige (28) et la guidant en vue de son déplacement axial et un moyen de verrouillage de tige, désolidarisable, comprenant un élément de verrouillage et un agencement à gorge, en vue de stopper le déplacement axial de ladite tige, caractérisé par
- une pièce polaire (46) encerclant ledit guide de tige (36),
- une armature (54), encerclant ledit guide de tige (36) et déplaçable axialement entre une première position, espacée de ladite pièce polaire (46), et une deuxième position attractée vers ladite pièce polaire (46),
- un bobinage de solénoïde (72) encerclant ladite pièce polaire (46) et ladite armature (54) et poussant ladite armature (54) vers ladite deuxième position lorsqu'elle est activée
- un moyen de déplacement (78) pour pousser ladite armature (54) vers ladite première position, et dans lequel
- ledit moyen de verrouillage de tige empêche tout mouvement axial de ladite tige (28) lorsque ladite armature (54) est dans ladite deuxième position et permettant ledit mouvement axial, lorsque ladite armature (54) se trouve dans ladite première position, de manière que l'actionnement dudit bobinage (72) empêche le conducteur du véhicule automobile de modifier les réglages de sélection de vitesse tandis que la désactivation permet d'opérer ces modifications.

2. Dispositif de verrouillage selon la revendication 1, dans lequel ledit moyen de verrouillage de tige comprend ladite armature (54), définissant une gorge intérieure (58) où s'engage au moins un élément sphérique (86) lorsqu'il se trouve dans une position déterminée, pour pousser ladite bille (86), jusqu'à son engagement dans une gorge (82), sur une partie mobile de ladite tige (28).

3. Dispositif de verrouillage selon la revendication 2, dans lequel ladite partie mobile de ladite tige (28) définit au moins deux desdites gorges (82,120).

4. Dispositif de verrouillage selon l'une quelconque des revendications 1 à 3, dans lequel ledit moyen de verrouillage de tige empêche tout déplacement axial dudit noyau intérieur (29) de câble, lorsque ladite armature (54) se trouve dans ladite deuxième position.

5. Dispositif de verrouillage selon la revendication 4, comprenant en outre un moyen élastique (78), poussant ladite armature (54) vers ladite première position.

6. Dispositif de verrouillage selon l'une des revendications 1 à 5, comprenant en outre un moyen d'ajustement de longueur de câble, comprenant ladite gaine extérieure (24), avec une liaison ajustable, comportant un premier jeu d'organes de contact, fixés sur une partie de ladite gaine de câble (24) et un deuxième jeu d'organes de contact, fixés à une autre partie de ladite gaine de câble (24), lesdits organes de contact permettant la rétraction de ladite liaison ajustable, mais empêchant son expansion.
